# EUROPEAN PATENT SPECIFICATION

(11) **EP 1 014 619 B1**
(45) Date of publication and mention of the grant of the patent: **06.05.2004**
(21) Application number: 98124376.9
(22) Date of filing: 22.12.1998
(51) Int. Cl.: H04L 12/14, H04M 15/00

(54) **Communication network and method for charging and accounting**
Kommunikationsnetz und Verfahren zur Vergebührung und Abrechnung
Réseau de communication et procédé de taxation et comptabilisation

(43) Date of publication of application: 28.06.2000
(73) Proprietor: Telefonaktiebolaget LM Ericsson (publ), 16483 Stockholm (SE)
(72) Inventor: Hundscheidt, Frank, 6463 BK Kerkrade (NL); Johansen, Harald, 4880 Rykene (NO); Tönnessen, Geir, 4638 Kristiansand (NO); Vergopoulos, George, 52134 Herzogenrath (DE)
(74) Representative: Mohsler, Gabriele

(56) References cited:
- EP-A- 0 346 897
- EP-A- 0 866 596
- EP-A- 0 905 961
- WO-A-97/26739

## Description

The present invention relates to charging and accounting in a communication network comprising a first network part and a second network part. The first network part can be a circuit switched and the second network part can be a packet switched network part.

Currently there is still a clear separation between the charging and accounting in circuit and packet switched worlds. In a circuit switched service or network, for instance, the public telecom network or a mobile telephone network accounting of services or calls is performed on the basis of the duration of the circuit switched and established call connection. In packet switched services or networks like the Internet or the world wide web information packets are sent to the user during a session, for example point-to-point protocol (PPP) or IP (Internet Protocol) session and accounting of the user session or call is performed on the basis of the duration of the session or of the number of information packets or of a flat-rate prize.

EP-A-0905961 discloses a solution for an integrated accounting for a packet and for a telephone network. For this purpose an additional connection link between the telephone network and the packet network is introduced in order to transfer the accounting data. The accountings are generated separately in the networks and after a call is finished all the charging information is transferred from the packet network to the telephone network and added to a call data record in the telephone network. Because of the independent generation of the accountings a correct charging can not be guaranteed.

Also in EP-A-0 346 897 an integrated accounting for a packet and for a telephone network is mentioned, in which the accountings are transferred from the packet network to the telephone network after a call is finished in order to add the accountings. However this also leads to an appropriate charging because of the separately generated accountings. Further in EP-A-0 346 897 a solution for a real-time accounting is presented. The telephone network receives only a control signal when the measured quantity of the transferred data packets in the packet network amounts to the predetermined accounting unit, which is received from the telephone network. Therefore it is not needed to transfer the whole charging data. However the specific charging in the packet network, which is administrated in a session data record is not supported, so that the provider cannot for example charge the user for a specific service. On the circuit switched network side accounting information is collected in a billing center whereas on the packet switched network side charging and accounting is provided by an accounting server, for instance, a remote authentication dial in user service (RADIUS) server, which will be called RADIUS in the following. Consequently, the user receives a bill issued by the billing center of the circuit switched network and a further bill issued on the basis of the session data collected in the accounting server or RADIUS server of the packet switched service. In the case the user wants to check the bills, it is awkward and difficult for the user to find corresponding lines or statements in both of the bills with regard to the same call or session.

Therefore, it is an object of the present invention to attain an improved transparency in charging and accounting in a communication network having a first network part and a second network part.

This object is solved by the communication network of claim 1 and by the method of claim 20.

Accordingly, the communication network of the invention comprises a first network part and a second network part and an interface between the first network part and the second network part, wherein the first network part produces a call data record assigned to each call initiated and established from the first network part, said call initiating a session in the second network part via the interface,
wherein the second network part generates a session data record assigned to said session and comprising session information being transferred from the second network part to the first network part via the interface, arid, within the first network part, means for adding the received session information to the call data record assigned to said initiated and established call, and means for charging and accounting the call on the basis of the call data record and said session information of the call data record.

In the communication network and the method of the present invention session information or a session identifier is sent from the second network part to the first network part, where the session information is added to the corresponding call data record. Charging and accounting of calls is carried out on call data records, for instance, in a billing center. Advantageously, each call data record comprises in addition the session information or session identifier, for instance, the Session_Id of the second network part. This means, that the call data records on the first network side now also comprises correlation information or accounting information from the second network side which allows correlation of accounting on both sides or the issue of one bill comprising accounting data of the first network part and the second network part in one bill. The present invention, therefore, improves transparency of accounting and service to the user of the communication network.

The first and second network parts can be circuit and packet switched network parts, or can both be packet switched or circuit switched network parts.

According to the invention, the circuit switched network part can produce call information within the call data record of said call, the call information being transferred from the circuit switched network part to the packet switched network part via the interface, and, within the packet switched network part, means for adding the received call information to the session data record assigned to said session. This is a further improvement of transparency in accounting since the accounting data records on both the circuit switched side and the packet switched side have the same information for correlation and identification information on the corresponding call.

Thus, in an preferred embodiment of the invention, a mobile services switching center (MSC) generates a network call reference as call information being part of the call data record, the network call reference is transferred via the interface from the MSC to the RADIUS server or accounting server of the packet switched network part via the access server, and the RADIUS server or accounting server uses the network call reference as session information or session identifier.

The circuit switched network part of the communication network can be a public land mobile network (PLMN), for instance, a Global System for mobile Communication (GSM) or any other cellular telephone system, an ISDN network, or a public switched telephone network (PSTN). The packet switched network part of the communication network can be, for instance a GPRS (General packet radio system), the Internet or an Internet protocol based network.

The interface between the circuit switched network part and the packet switched network part of the inventive communication system can comprise, for instance, an access server or several access servers, a standalone access server in combination with an external interface providing a connecting line for sending the session information or the session identifier from the standalone access server to the circuit switched side, for instance, to a mobile services switching center (MSC) via the external interface, the MSC containing an integrated access server or several integrated access servers. In the case of an integrated access server, an internal interface is provided for transferring the session information or session identifier from the packet switched network part to the circuit switched network part via the internal interface.

In the method of the invention for charging and accounting a call in a communication network comprising a first network part and a second network part and an interface between the first network part and the second network part, during initiating and establishing a call and during the ongoing call in the first network part, a session is initiated by the call in the second network part, a call data record assigned to said initiated and established call is generated in the first network part, wherein, in the second network part, a session data record is generated which is assigned to the session and comprises session information, wherein the session information is transferred from the second network part to the first network part via the interface, and, within the first network part, the received session information is added to the call data record assigned to said initiated and established call, wherein charging and accounting the call is carried out on the basis of the call data record and said session information added to the call data record.

Initialization can alternatively be started in the second network and the call can be established to the first network.

During initiating and establishing a call, a network call reference as part of the call data record can be generated within the first network part, wherein the network call reference is transferred from the first network part to the second network part via the interface.

During initiating and establishing a call a PPP session in the second network part can be started and authentication and authorization can be proved within the second network part.

During the PPP session, an Accounting Request message can be sent from the access server (AS) to the RADIUS server or accounting server, the Accounting Request message comprising the call information or a network call reference, afterwards storing the call information or network call reference in the RADIUS or accounting server and in the generated call data record in the MSC, and sending back an Account Response message from the Radius server or accounting server to the MSC. Correlation of the circuit-switched call data records with the RADIUS accounting records is obtained.

Optionally the network call reference may be used as the Session_Id.

In a preferred method of the invention the call is able to enter a semi-connected mode, wherein the physical connection is released, whereas the connecting parameters of the dial up session (e.g. PPP or IP) are kept. With this approach a correlation of all the call data records corresponding to different circuit switched call sessions, but to the same user session, for instance, PPP session is achieved. Further, information from the circuit-switched call data records about the duration of the semi-connected mode is available.

In the semi-connected modus the call re-establishment in the same MSC/access server configuration can be carried out with the following steps:
during initiating and re-establishing the call a further network call reference is generated in the GSM network,
during re-establishing of the session or PPP session the connected access server determines that a session or PPP session has been set up before for the corresponding call or number,
afterwards, the corresponding session information or session identifier stored before in the access server or the accounting server is fetched by the access server and stored in the further call data reference of the MSC.

In the semi-connected mode the call re-establishment in another MSC/access server configuration is carried out with the following steps:
during initiating and establishing the call a further or new network call reference or call information is generated in the GSM network or the connected MSC,
during re-establishing of the session or PPP session the connected access server requests authorisation and authentication from the RADIUS server or accounting server,
then, the RADIUS server or accounting server determines that the call or number already has another PPP session ongoing in another access server, wherein the session information or session identifier is assigned to the another ongoing PPP session, then the RADIUS server forwards the session information or session identifier to the connected access server, wherein the received session information or session identifier from the RADIUS server or accounting server is stored in the corresponding further network call reference. These features implement a secure operation of the semi-connected mode in, for instance, a GSM/Internet network configuration where roaming of the mobile station or mobile telephone could happen.

At call disconnection or during the ongoing call, the call data record with the session information or session identifier of the MSC can be sent to a billing center for further charging and accounting processing.

In a preferred embodiment of the invention, after an access server has sent a session information or session identifier to a MSC, the MSC returns semi-connected mode parameters to the access server. The SCM (semi-connected mode) parameters from the MSC comprise information about whether SCM is allowed or not or even rejected. This feature helps to run the network in a secure mode if the network operates at its limit of capacity.

The MSC operation can thereby control the operations done in the access server, e.g. if the access server is owned by an Internet service provider.

In case of RADIUS accounting issued for the packet switched accounting, the Session_Id may be used as session information to be sent to the circuit switched network part. But different information or different parameters can although be transferred to the call data record, for instance, if other or new protocols like the so called DIAMETER protocol and so on are used. The DIAMETER protocol is thought to be a replacement or enhancement to RADIUS. Further, the session information can comprise a more specified accounting information or a complete accounting information from the accounting server or RADIUS server. In the semi-connected mode, this has the advantage, that correlation of all the call data records corresponding to different circuit switched call session, but to the same user session or PPP session is achieved.

Further advantageous improvements of the present invention are mentioned in the dependent claims. Further objects, advantages, advantageous improvements and applications of the invention are given in the following description of a preferred embodiment of the invention in connection with the enclosed figures in which:
Fig. 1 is a schematic block diagram of a communication network according to an embodiment of the communication network of the invention having a GSM-network as circuit switched network part and an Internet protocol network as packet switched network part; and
Fig. 2 a signalling flow example of the communication network of figure 1.

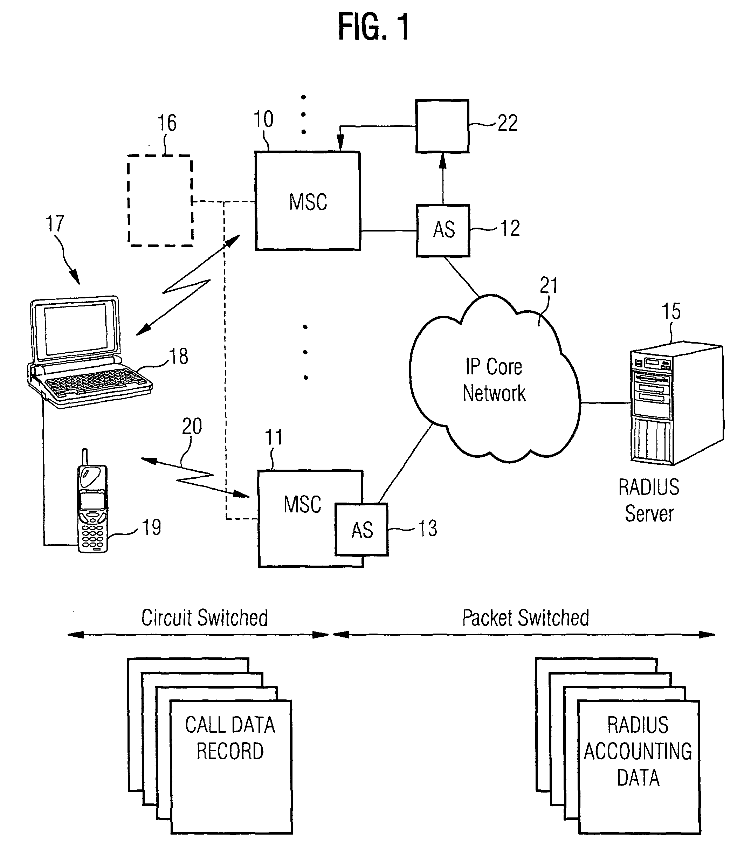

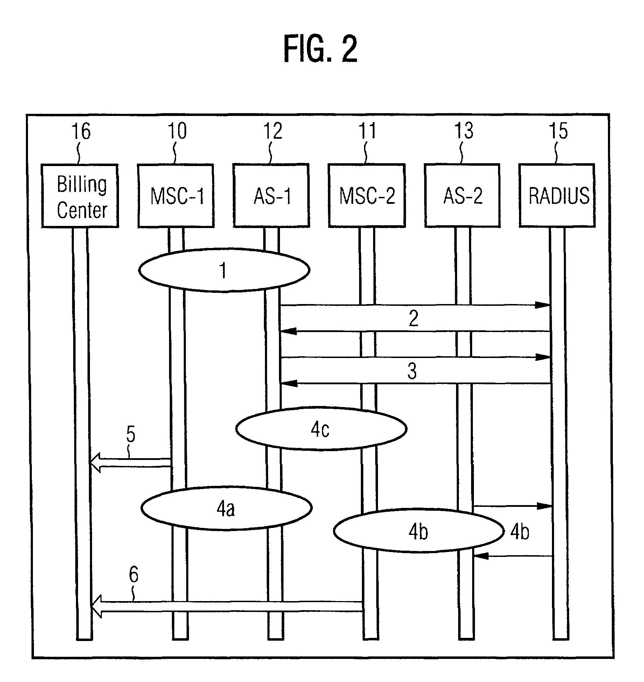

In the following a preferred embodiment of the invention is described and explained by example in connection with the figures 1 and 2. In figure 1 a basic configuration of the preferred embodiment of the communication network of the present invention is shown, wherein a GSM network as circuit switched network part is coupled to an Internet or Internet protocol network as packet switched network part and different states of coupling by an interface between the GSM network and the Internet are illustrated.

The GSM (Global System for Mobile communication) comprises a mobile station 17 carried by a subscriber, several mobile service switching centres (MSC) 10, 11 that perform the switching of calls between the mobile station 17 and other fixed or mobile network users as well as the management of mobile services and a billing center 16.

The mobile station 17 comprises the physical equipment, such as the radio transceiver display and digital signal processor and a smart card called the subscriber identified module. In the figure 1 the mobile station 17 comprises a personal computer or a notebook 18 connected via a PCMCIA (Personal Computer Memory Card Industry Association) interface to a mobile telephone 19. The connection between the mobile station 17 and an MSC 10, 11 is performed by at least one base station subsystem (not explicitly shown, but symbolises via the arrow) 20 that communicates with the MSC. The mobile station 17 and the base station sub system 20 communicate across the Um interface, also known as the air interface or radio link. Each MSC 10, 11 acts like a normal switching note of the public switching telephone network or the ISDN and in addition it provides on the functionality needed to handle a mobile subscriber using the mobile station 17, such as registration, authentication, location updating, handovers and call routing to a roaming subscriber. The MSC 10, 11 provides the connection to the Internet or internet protocol core network 21 on the side of the packet switched network part.

In each of the MSCs 10, 11 in the GSM network, for instance, the following charging and accounting related information is collected in a call data record: calling party number, called party number, time for start of charge, time for stop of charge, tariff class, network call reference, etc..

More detailed, the MSC 10 is coupled to a standalone access server 12 as interface between the circuit switched GSM network and the packet switched network. The standalone access server 12 provides connection to the Internet. Further the interface comprises an external interface 22 for transferring information or specific information from the standalone access server 12 to the MSC 10.

The MSC 11 is combined with an access server 13 to the Internet core network 21 wherein this combination of the MSC 11 and the access server 13 provides an integrated access server for interfacing the GSM network to the Internet. Further in the integrated access server an internal interface (not shown) is integrated.

A remote authentication dial in user service (RADIUS) server 15 is connected to the Internet protocol core network 21. The RADIUS server 15 operates functions or a protocol for carrying out authentication, authorisation and accounting information if requested by one of the access servers 12, 13. For instance the RADIUS server 15 collects the following accounting information or session record data: called station identifier, calling station identifier, service type, user name, user IP address, session-time, input-packets, output-packets, terminate-calls, Session_Id, etc. More details of the general functionality of the RADIUS server 15 are mentioned in the reference RFC 2138, April 1997, titled "Remote Authentication Dial in User Service (RADIUS)" and in the reference RFC 2139, April 1997, titled "RADIUS Accounting".

The shown communication network has the ability to operate and run in a semi-connected mode (SCM). If a call goes into the semi-connected mode, this means that the physical connection in the GSM network is released, whereas the established PPP session and parameters in the Internet is kept.

In the following, the signalling flow example shown in the figure 2 is described for detailed explanation of the method of the invention. If the user or subscriber of the mobile station 17 operates the notebook 18 in order to output a call via the mobile telephone 19, the base station subsystem 20 of the GSM network connects the call to the mobile services switching center MSC 10 (MSC-1). After the call connection between the mobile station 17 and the MSC 10 is established, the MSC 10 generates a call data record assigned to the call and sets up the connection to the standalone access server 12 (AS-1) or access server as interface connecting the Internet network as packet switched network part to the GSM network as circuit switched network part of the communication network. The through connection of the call to the access server 12 is shown by reference numeral 1 in the figure 2.

Next, setting up the PPP session is described which is shown by the arrows of numeral 2 in figure 2. The access server 12 sends an Access Request message from the access server 12 to the RADIUS server 15. After receiving the Access Request message from the access server 12 the RADIUS server 15 outputs an Access Accept message to the access server 12. The RADIUS server 15 then performs authentication and authorisation of the subscriber call by means of information and data exchange between the access server 12 and the RADIUS server 15. If authentication and authorisation is confirmed by the RADIUS server 15 the requested and corresponding PPP (point-to-point protocol) connection or session within the Internet is established.

In the next step shown by the arrows of numeral 3 in the figure 2, the access server 12 sends an Accounting Request message to the RADIUS server 15 or accounting server. The RADIUS server 15 then generates a session identifier or Session_Id as session information of its session data record or RADIUS accounting data which is assigned to the established PPP session. The generated session identifier is stored in the session data record in the RADIUS server accounting function. Afterwards the RADIUS server outputs an Accounting_Response message that contains the session identifier and is forwarded to the access server 12

The session identifier is then forwarded by the access server 12 to the MSC 10 via the switched through connection between the access server 12 and the MSC 10 or via the external interface 22. The MSC 10 adds the received session identifier from the access server 12 to the corresponding call data record.

In an alternative embodiment, during GSM call set up signalling in numeral 1 of figure 2, the MSC 10 generates the call data record assigned to the current subscriber call and a network call reference as call information in the call data record. During the procedure of numeral 1 the MSC 10 forwards the network call reference to the access server AS 12, where the network call reference from the MSC 10 is stored.

Thereafter the signalling of numeral 3 is initiated by sending the Accounting Request massage from the access server 12 to the RADIUS server 15, wherein the access server 12 adds the network call reference from the MSC 10 to the Accounting Request message. After receiving the Accounting Request message comprising the network call reference the RADIUS server 15 stores this network call reference as session identifier or Session_Id in its session data record. Afterwards the RADIUS server sends the Accounting_Response message having the session identifier to the access server 12 that outputs this session identifier to the MSC 10 as session identifier that is stored in the respective call data record by the MSC 10. Thus, the session identifier from the RADIUS server 15 can be a copy of the network call reference as call information from the MSC 10.

The network call reference of the call data record is either received by the MSC 10 from another MSC that is connected to the MSC 10, but not to the access server 12, and that has generated the network call reference or the network call reference is generated by the MSC 10 itself, if it did not receive a network call reference as call information.

After call disconnection, for example after release of the GSM physical connection or also during the ongoing call, the call data record comprising the session identifier assigned to the call is sent to the billing center 16, for instance, via a billing gate way as charging and accounting information with regard to the call. In the billing center 16 the post processing after the call takes place wherein on the basis of the call data record with session identifier accounting and charging is performed. This step is shown by arrow 5 in the figure 2.

If the MSC 10 and the access server 12 would be combined, i.e. in the case of an integrated access server, the access server 12 would send the session identifier or session information via an internal interface to the MSC 10, wherein the internal interface is integrated into the integrated access server. If the access server 12 is a standalone access server the session identifier or session information from the RADIUS server 15 is sent via external interface 22 to the MSC 10.

In the following the procedures are described when the call goes into a semi-connected mode that is supported by the shown embodiment of the communication network of the invention. Semi-connected mode indicates generally a technique where it is possible to disconnect the physical layer while the one or more upper layers stay in a "connect" state. This means, that several circuit switched call sessions with corresponding call data records belong to one semi-connected mode session. Further, the call going into the semi-connected mode means that the physical connection in the GSM network part is released, whereas the PPP session and parameters in the Internet are kept.

During the semi-connected mode status the mobile station or mobile subscriber may either stay within the covered area of the same MSC and access server (no. 4a in figure 2) or roam to the coverage area of another MSC with the same access server (no. 4c in figure 2) or to another MSC with another access server ( no. 4b in figure 2).

In the following the call re-establishment in the same MSC/AS combination is described. This case is illustrated in figure 2 by number 4a. A call re-establishment in the same MSC 10 and access server 12 is substantially performed like the initial call establishment described above and illustrated with number 1 in figure 2. Since the MSC 10 does not know about the ongoing Internet session and the ongoing RADIUS accounting session, the MSC 10 generates during call re-establishment in the semi-connected mode a further or new network call reference in its call data record. And after through connection, again a PPP session in the Internet is started and initiated. During initiating the establishment of the PPP session the access server 12 determines that it already has set up a PPP session for the corresponding call or a number before. In this case the access server 12 fetches the session identifier or Session_Id stored before in the access server 12 and transfers the found session identifier to the MSC 10 where the session identifier is added to and stored in the call data record.

The session identifier is sent from the access server 12 to the MSC 10 via, for instance, an external interface 22, since in the shown case the AS 12 is a standalone access server. Further the session identifier may optionally be used as the network call reference in the call data record of the MSC 10.

Next the call re-establishment in another MSC and another access server is explained in connection with no. 4b in the figure 2.

In this case a call re-establishment in another MSC/AS combination, for instance, the MSC 11 (MSC-2) and the access server 13 (AS-2) is again substantially performed like the initial call establishment mentioned above with regard to no. 1 in figure 2. In this case, since a roaming into the different coverage area of the MSC 11 by the telephone mobile station subscriber took place, here the MSC 11 generates a separate call data record having a new network call reference because the MSC 11 does not have any information about the pending semi-connected mode state of the PPP session in the old MSC. The MSC 11 therefore initiates after through connection to the access server 13 a PPP session within the Internet. Since the different access server 13 cannot find any information about an ongoing session of the same subscriber in the semi-connected mode, since this is only stored in the access server 12, the access server 13 sends an Access Request message to the RADIUS server 15 and receives the Access Accept message from the RADIUS server 15 in response. Then, during the establishment of the PPP session, the access server 13 requests as described above with regard to no. 2 of figure 2 an authorisation and authentication from the RADIUS server 15. The RADIUS server 15 then determines whether the subscriber of the currently initiated session, for instance, based on a calling party number, already has another PPP session ongoing in the semi-connected mode in another access server. In this case the RADIUS server 15 finds that for the same subscriber or mobile station 17 already a PPP session is ongoing in the semi-connected mode in connection with the access server 12. As mentioned above with regard to no. 3 in figure 2 the RADIUS server 15 determines the RADIUS parameters including the session identifier that, for instance, can be the same session identifier as already used during the ongoing session between the RADIUS server 15 and the access server 12. The session identifier or Session_Id then is forwarded, for instance, within the Accounting_Response message from the RADIUS server 15 to the access server 13. After reception of the session identifier from the RADIUS server 15 the access server 13 transfers or outputs the session identifier to the MSC 11 via, for instance, an internal interface. The MSC 11 then stores the received session identifier in the call data record or uses it optionally as network call reference. The corresponding call data record and the session identifier or Session_Id then are sent to the billing centre 16 via the connection 6 shown in figure 2.

If after roaming of the mobile station 17 the mobile station 17 enters the covered area of another MSC, but the same access server is maintained, the procedure during re-establishment of the call connection is substantially the same as mentioned above with regard to the case with same MSC and same access server shown by number 4a in figure 2.

As illustrated by number 4c in figure 2 the new MSC is the MSC 11 and the maintained access server is access server AS 12 as during originally establishing the call and session.

Again, the MSC 11 of the GSM network generates a call data record with a corresponding, further or different network call reference since the MSC-11 does riot know anything about an already ongoing PPP session in the semi-connected mode. The MSC 11 initiates and starts a PPP session in the access server AS 12. The access server AS 12 then determines whether it has already stored a session information or a session identifier for the corresponding calling party number or subscriber before. If the AS 12 finds a session information or a session identifier assigned to the same subscriber as before - which is the case in the example - the found session identifier is output to the MSC 11 that stores this session identifier in its call data record and sends its call data record and the session identifier to the billing centre 16 via the connection 6 for accounting/charging post processing.

If during re-establishment of the call the access server or the RADIUS server cannot find a corresponding already ongoing session in the semi-connected mode the procedures or steps according to no. 2 and 3 have to be completely performed as during normal establishing of a session.

Since the mobile station, for instance, in a car can pass or touch the coverage area of several different MSCs, the just mentioned re-establishment procedures can be performed several times in the semi-connected mode.

After an access server has sent the session information or session identifier to the MSC, the MSC may return semi-connected mode parameters, for instance, whether semi-connected mode is allowed to be used or not or the timer values etc. to the access server. Also the MSC may return a semi-connected mode rejected message in the case semi-connected mode is not allowed for instance due to capacity reasons. Then the access server is instructed not to go into the semi-connected mode but rather release the call or session completely.

## Claims

1. Communication network comprising a first and a second network part and an interface between the two network parts, wherein the first and second network parts are based on different accounting systems, and
wherein the first network part produces a call data record assigned to each call initiated and established from the first network part, said call initiating a session in the second network part via the interface,
wherein the second network part generates a session data record assigned to said session and comprising a session identifier being transferred from the second network part to the first network part via the interface, and,
within the first network part, means for adding the received session identifier to the call data record assigned to said initiated and established call, and
means for charging and accounting the call on the basis of the call data record and said session identifier of the call data record.

2. Communication network system according to claim 1, wherein the first network part is a circuit switched network part, and the second network part is a packet switched network part.

3. Communication network according to claim 2, wherein the circuit switched network part is a public land mobile network PLMN (GSM (Global system of mobile Communication)) or fixed network (PSTN (public switched telephone network) or ISDN).

4. Communication network according to claim 2, wherein the packet switched network part is a GPRS (General Packet Radio System) or Internet or Internet protocol based network.

5. Communication network of claim 2, wherein the circuit switched network part produces call information within the call data record of said call, the call information being transferred from the circuit switched network part to the packet switched network part via the interface, and,
within the packet switched network part, means for adding the received call information to the session data record assigned to said session.

6. Communication network of claim 2 or claim 5, wherein the packet switched network part comprises a remote authentication dial in user service (RADIUS) server or a DIAMETER server producing the session identifier.

7. Communication network of claim 6, wherein the RADIUS server or the DIAMETER server is the means for adding the call information from the circuit switched network part to the session data record.

8. Communication network of one of the claims 2 to 7, wherein a session information corresponds to the session identifier.

9. Communication network of claim 3, wherein the GSM network comprises one or more mobile services switching centers (MSC), at least one of the mobile services switching centers MSCs generating the call information assigned to said initiated and established call.

10. Communication network of claim 9, wherein each of the mobile services switching centers MSCs is connected to a billing center as means for charging and accounting the respective call.

11. Communication network of one of the claims 1 to 10, wherein the interface between the first and second network comprises an access server or several access servers.

12. Communication network of claim 11, wherein the access server is a standalone access server.

13. Communication network of claim 12, wherein in the case of a standalone access server an external interface is provided for sending the session information or the session identifier from the standalone access server to the MSC via an external interface.

14. Communication network of claim 11, wherein the interface comprises an integrated access server or several integrated access servers, each integrated access server being a part of an MSC.

15. Communication network of claim 14, wherein in the case of an integrated access server an internal interface is provided for transferring the session information or session identifier from the packet switched network part to the circuit switched network part via the internal interface.

16. Communication network of one of the claims 1 to 15, wherein the circuit switched network part comprises one or more mobile services switching centers MSCs, at least one of the mobile services switching centers MSCs being coupled to an access server of the packet switched network part.

17. Communication network of claim 16, wherein the mobile services switching center MSC generates a network call reference as call information being part of the call data record, the network call reference being transferred via the interface from the mobile services switching center MCS to the RADIUS server or accounting server of the packet switched network part via the access server, and the RADIUS server or accounting server using the network call reference as session information or session identifier.

18. Communication network according to claim 1, wherein the first and second network parts are packet switched network parts.

19. Communication network according to claim 1, wherein the first and second network parts are circuit switched network parts.

20. Method for charging and accounting a call in a communication network comprising a first network part and a second network part and an interface between the first network part and the second network part,
wherein, during initiating and establishing a call in the first network part a session is initiated by the call in the second network part, a call data record assigned to said initiated and established call being generated in the first network part,
wherein, in the second network part, a session data record is generated which is assigned to the session and comprises a session identifier,
wherein the session identifier is transferred from the second network part to the first network part via the interface, and,
within the first network part, the received session identifier is added to the call data record assigned to said initiated and established call, wherein charging and accounting of the call is carried out on the basis of the call data record and said session identifier added to the call data record.

21. Method according to claim 20, wherein the first network part is a circuit switched network part and second network part is a packet switched network part.

22. Method of claim 21, wherein during initiating and establishing a call a network call reference as part of the call data record is generated within the circuit switched network part, wherein the network call reference is transferred from the circuit switched network part to the packet switched network part via the interface.

23. Method of claim 21, wherein during initiating and establishing a call a network call reference as part of the call data record is generated within the packet switched network part, wherein the network call reference is transferred from the packet switched network part to the circuit switched network part via the interface.

24. Method of one of claim 21 to 23, wherein during initiating and establishing a call a Point-to-Point Protocol PPP session in the packet switched network part is started.

25. Method of one of the claims 21 to 24, wherein during initiating and establishing of a call authentication and authorization is provided within the packet switched network part.

26. Method of claim 21 to 25 , wherein during initializing and establishing a call in a GSM network the network call reference of the call data record assigned to said call is generated by an mobile services switching center MSC of the GSM network, said call being coupled to an access server by said mobile services switching center MSC and after through connection a PPP session in the packet switched network part is started.

27. Method of claim 26, during starting of the PPP session an Access Request message is sent from the access server to a RADIUS server and after receiving an Access Accept message from the RADIUS server in the access server the corresponding PPP session or connection is established.

28. Method of claim 27, wherein, during the PPP session, an Accounting Request message is sent from the access server (AS) to the RADIUS server or accounting server, the Accounting Request message comprising the call information or a network call reference, afterwards storing the call information or network call reference in the RADIUS or accounting server and in the generated call data record in the mobile services switching center MSC, and sending back an Account Response message from the RADIUS server or accounting server to the MSC.

29. Method of claim 26, wherein the call is able to enter semi-connected mode, wherein the physical connection is released, whereas Point-to-Point Protocol PPP parameters of the dial up session are kept.

30. Method of claim 29, wherein in the semi-connected mode the call re-establishment in the same MSC/access server configuration is carried out with the following steps:
during initiating and re-establishing the call a further network call reference is generated in the GSM network or the connected mobile services switching center MSC,
during re-establishing of the session or PPP session the connected access server determines that a session or PPP session has been set up before for the corresponding call or number,
afterwards, the corresponding session information or session identifier stored before in the access server or the accounting server is fetched by the access server and stored in the further call data reference of the mobile services switching center MSC.

31. Method of claim 29, wherein in the semi-connected modus the call re-establishment in another MSC/access server configuration is carried out with the following steps:
during initiating and establishing the call a further network call reference or call
information is generated in the GSM network or the connected mobile services switching center MSC, during re-establishing of the session or PPP session the connected access server requests authorisation/authentication from the RADIUS server or accounting server ,
then, the RADIUS server or accounting server determines that the call or number already has another PPP session ongoing in another access server, wherein the session information or session identifier is assigned to the another ongoing PPP session,
then the RADIUS server forwards the session information or session identifier to the connected access server;
the received session information or session identifier from the RADIUS server or accounting server is stored in the corresponding further network call reference.

32. Method of one of the claims 20 to 31, wherein at call disconnection or during the ongoing call, the call data record with the session information or session identifier of the mobile services switching center MSC are sent to a billing center for further charging and accounting processing.

33. Method of one of the claims 20 to 32, wherein after an access server has sent a session information or session identifier to a mobile services switching center MSC, the mobile services switching center MSC returns mode parameters to the access server.

34. Method of claim 33, wherein the parameters from the mobile services switching center MSC comprise information about whether semi-connected mode SCM is allowed or not.

## Patentansprüche

1. Kommunikationsnetzwerkwerk mit einem ersten und einem zweiten Netzwerkteil und einer Schnittstelle zwischen den beiden Netzwerkteilen, wobei das erste und das zweite Netzwerkteil auf unterschiedlichen Abrechnungssystemen basiert, und wobei das erste Netzwerkteil einen Rufdatensatz erzeugt, der jedem von dem ersten Netzwerkteil initiierten und aufgebauten Anruf zugeordnet wird, und der Anruf über die Schnittstelle eine Sitzung in dem zweiten Netzwerkteil initiiert,
wobei das zweite Netzwerkteil einen dieser Sitzung zugeordneten Sitzungsdatensatz erzeugt, der einen Sitzungsidentifizierer umfaßt, der über die Schnittstelle von dem zweiten Netzwerkteil an das erste Netzwerkteil übertragen wird, sowie
in dem ersten Netzwerkteiles mit Mitteln zum Hinzufügen des erhaltenen Sitzungsidentifizierers zu dem dem initiierten und aufgebauten Anruf zugeordneten Rufdatensatz, sowie
mit Mittel zum Abrechnen und Buchen des Anrufes auf der Grundlage des Rufdatensatzes und des Sitzungsidentifizierers des Rufdatensatzes.

2. Kommunikationsnetzwerksystem nach Anspruch 1, wobei das erste Netzwerkteil ein leitungsvermitteltes Netzwerkteil und das zweite Netzwerkteil ein paketvermitteltes Netzwerkteil ist.

3. Kommunikationsnetzwerk nach Anspruch 2, wobei das leitungsvermittelte Netzwerkteil ein öffentliches Mobilkommunikationsnetz PLMN (GSM - Global System of Mobile Communication) oder ein Festnetz PSTN (öffentliches Fernsprechwählnetz) oder ISDN ist.

4. Kommunikationsnetzwerk nach Anspruch 2, wobei das paketvermittelte Netzwerkteil ein paketorientiertes GPRS (General Packet Radio System) oder das Internet oder ein Internetprotokoll-basiertes Netz ist.

5. Kommunikationsnetzwerk nach Anspruch 2, wobei das leitungsvermittelte Netzwerkteil innerhalb des Rufdatensatzes des Anrufes Rufinformationen erzeugt, die über die Schnittstelle von dem leitungsvermittelten Netzwerkteil an das paketvermittelte Netzwerkteil übertragen werden, und
innerhalb des paketvermittelten Netzwerkteiles, Mitteln zum Hinzufügen der erhaltenen Rufinformationen zu dem der Sitzung zugeordneten Sitzungsdatensatz.

6. Kommunikationsnetzwerk nach Anspruch 2 oder Anspruch 5, wobei das paketvermittelte Netzwerkteil einen RADIUS-Server (Remote Authentication Dial in User Service) oder einen DIAMETER-Server zum Erzeugen des Sitzungsidentifizierers umfaßt.

7. Kommunikationsnetzwerk nach Anspruch 6, wobei der RADIUS-Server oder der DIAMETER-Server das Mittel zum Hinzufügen der Rufinformationen von dem leitungsvermittelten Netzwerkteil zu dem Sitzungsdatensatz ist.

8. Kommunikationsnetzwerk nach einem der Ansprüche 1 bis 7, wobei eine Sitzungsinformation dem Sitzungsildentifizierer entspricht.

9. Kommunikationsnetzwerk nach Anspruch 3, wobei das GSM-Netz eine oder mehrere Mobilfunkvermittlungsstellen (MSC) umfaßt, wobei mindestens eine der Mobilfunkvermittlungsstellen die dem initiierten und aufgebauten Anruf zugeordnete Rufinformationen erzeugt.

10. Kommunikationsnetzwerk nach Anspruch 9, wobei jede der Mobilfunkvermittlungsstellen mit einem Abrechnungszentrum als Mittel zum Abrechnen und Buchen des jeweiligen Anrufes verbunden ist.

11. Kommunikationsnetzwerk nach einem der Ansprüche 1 bis 10, wobei die Schnittstelle zwischen dem ersten und zweiten Netzwerk einen oder mehrere Zugriffsserver umfaßt.

12. Kommunikationsnetzwerk nach Anspruch 11, wobei der Zugriffsserver ein eigenständiger Zugriffsserver ist.

13. Kommunikationsnetzwerk nach Anspruch 12, wobei im Fall eines eigenständigen Zugriffsservers eine externe Schnittstelle zum Senden der Sitzungsinformation oder des Sitzungsidentifizierers über eine externe Schnittstelle von dem eigenständigen Zugriffsserver an die Mobilfunkvermittlungsstelle vorgesehen ist.

14. Kommunikationsnetzwerk nach Anspruch 11, wobei die Schnittstelle einen oder mehrere integrierte Zugriffsserver umfaßt, von denen jeder ein Teil der Mobilfunkvermittlungsstelle bildet.

15. Kommunikationsnetzwerk nach Anspruch 14, wobei im Fall eines integrierten Zugriffsservers eine interne Schnittstelle zum Übertragen der Sitzungsinformation oder des Sitzungsidentifizierers über die interne Schnittstelle von dem paketvermittelten Netzwerkteil an das leitungsvermittelte Netzwerkteil vorgesehen ist.

16. Kommunikationsnetzwerk nach einem der Ansprüche 1 bis 15, wobei das leitungsvermittelte Netzwerkteil eine oder mehrere Mobilfunkvermittlungsstellen umfaßt, wobei mindestens eine der Mobilfunkvermittlungsstellen mit einem Zugriffsserver des paketvermittelten Netzwerkteiles verknüpft ist.

17. Kommunikationsnetzwerk nach Anspruch 16, wobei die Mobilfunkvermittlungsstelle eine Netzverbindungskennung als Rufinformation als Teil des Rufdatensatzes erzeugt, wobei die Netzverbindungskennung über die Schnittstelle von der Mobilfunkvermittlungsstelle an den RADIUS-Server oder Abrechnungsserver des paketvermittelten Netzwerkteiles über den Zugriffsserver übertragen wird und der RADIUS-Server oder Abrechnungsserver die Netzverbindungskennung als Sitzungsinformation oder Sitzungsidentifizierer verwendet.

18. Kommunikationsnetzwerk nach Anspruch 1, wobei das erste und zweite Netzwerkteil paketvermittelte Netzwerkteile sind.

19. Kommunikationsnetzwerk nach Anspruch 1, wobei das erste und zweite Netzwerkteil leitungsvermittelte Netzwerkteile sind.

20. Verfahren zum Berechnen und Buchen eines Anrufes in einem Kommunikationsnetzwerk, mit einem ersten Netzwerkteil und einem zweiten Netzwerkteil und einer Schnittstelle zwischen dem ersten Netzwerkteil und dem zweiten Netzwerkteil,
wobei während des Initiierens und Aufbauens eines Anrufes in dem ersten Netzwerkteil eine Sitzung von dem Anruf in dem zweiten Netzwerkteil initiiert wird und ein Rufdatensatz, der dem initiierten und aufgebauten Anruf zugeordnet ist, in dem ersten Netzwerkteil erzeugt wird,
wobei in dem zweiten Netzwerkteil ein Sitzungsdatensatz erzeugt wird, der der Sitzung zugeordnet ist und einen Sitzungsidentifizierer umfaßt,
wobei der Sitzungsidentifizierer über die Schnittstelle von dem zweiten Netzwerkteil an das erste Netzwerkteil übertragen wird, und
in dem ersten Netzwerkteil der erhaltene Sitzungsidentifizierer dem dem initiierten und aufgebauten Anruf zugeordneten Rufdatensatz hinzugefügt wird, wobei das Abrechnen und Buchen des Anrufes auf der Grundlage des Rufdatensatzes und des dem Rufdatensatz hinzugefügten Sitzungsidentifizierers durchgeführt wird.

21. Verfahren nach Anspruch 20, wobei das erste Netzwerkteil ein leitungsvermitteltes Netzwerkteil und das zweite Netzwerkteil ein paketvermitteltes Netzwerkteil ist.

22. Verfahren nach Anspruch 21, wobei während des Initiierens und Aufbauens eines Anrufes eine Netzverbindungskennung innerhalb des leitungsvermittelten Netzwerkteiles als Teil des Rufdatensatzes erzeugt wird, wobei die Netzverbindungskennung über die Schnittstelle von dem leitungsvermittelten Netzwerkteil an das paketvermittelte Netzwerkteil übertragen wird.

23. Verfahren nach Anspruch 21, wobei während des Initiierens und Aufbauens eines Anrufes eine Netzverbindungskennung innerhalb des paketvermittelten Netzwerkteiles als Teil des Rufdatensatzes erzeugt wird, wobei die Netzverbindungskennung über die Schnittstelle von dem paketvermittelten Netzwerkteil an das leitungsvermittelte Netzwerkteil übertragen wird.

24. Verfahren nach einem der Ansprüche 21 bis 23, wobei während des Initiierens und Aufbauens eines Anrufes eine Point-to-point-Protokoll-(PPP)-Sitzung in dem paketvermittelten Netzwerkteil gestartet wird.

25. Verfahren nach einem der Ansprüche 21 bis 24, wobei während des Initiierens und Aufbauens eines Anrufes eine Authentifizierung und Berechtigung innerhalb des paketvermittelten Netzwerkteiles vorgesehen ist.

26. Verfahren nach den Ansprüchen 21 bis 25, wobei während des Initiierens und Aufbauens eines Anrufes in einem GSM-Netz die Netzverbindungskennung des dem Anruf zugeordneten Rufdatensatzes von einer Mobilfunkvermittlungsstelle des GSM-Netzes erzeugt wird, wobei der Anruf durch die Mobilfunkvermittlungsstelle mit einem Zugriffsserver verknüpft wird und nach einer Durchschaltung eine PPP-Sitzung in dem paketvermittelten Netzwerkteil gestartet wird.

27. Verfahren nach Anspruch 26, wobei während des Startens der PPP-Sitzung eine Zugriffsanforderungsnachricht von dem Zugriffsserver an einen RADIUS-Server gesendet und nach Erhalt einer Zugriffsannahmenachricht von dem RADIUS-Server im Zugriffsserver die entsprechende PPP-Sitzung oder Verbindung aufgebaut wird.

28. Verfahren nach Anspruch 27, wobei während der PPP-Sitzung eine Abrechnungsanforderungsnachricht vom Zugriffsserver (AS) an den RADIUS-Server oder Abrechnungsserver gesendet wird und die Abrechnungsanforderungsnachricht die Rufinformationen oder eine Netzverbindungskennung enthält, wobei die Rufinformationen oder die Netzverbindungskennung anschließend im RADIUS-Server oder Abrechnungsserver sowie in dem erzeugten Rufdatensatz in der Mobilfunkvermittlungsstelle gespeichert wird und eine Abrechnungsantwortnachricht vom RADIUS-Server oder Abrechnungsserver an die Mobilfunkvermittlungsstelle zurückgesendet wird.

29. Verfahren nach Anspruch 26, wobei der Anruf einen Halbverbindungsmodus eingehen kann, in dem die physikalische Verbindung freigegeben wird, während die Point-to-Point-Protokoll-Parameter der Sitzung behalten werden.

30. Verfahren nach Anspruch 29, wobei in dem Halbverbindungsmodus der Wiederaufbau des Anrufes in derselben Konfiguration der Mobilfunkvermittlungsstelle/des Zugriffservers gemäß den folgenden Schritten durchgeführt wird:
- während des Initiierens und Wiederaufbauens des Anrufes wird eine weitere Netzverbindungskennung in dem GSM-Netz oder der verbundenen Mobilfunkvermittlungsstelle erzeugt,
- während des Wiederaufbauens der Sitzung oder der PPP-Sitzung bestimmt der verbundene Zugriffsserver, daß eine Sitzung oder PPP-Sitzung für den entsprechenden Anruf oder die entsprechende Nummer zuvor aufgebaut wurde,
- die bzw. der zuvor in dem Zugriffsserver oder dem Abrechnungsserver gespeicherte entsprechende Sitzungsinformation oder Sitzungsidentifizierer wird anschließend vom Zugriffsserver geholt und in der weiteren Rufdatenkennung der Mobilfunkvermittlungsstelle gespeichert.

31. Verfahren nach Anspruch 29, wobei in dem Halbverbindungsmodus der Wiederaufbau des Anrufes in einer anderen Konfiguration der Mobilfunkvermittlungsstelle bzw. des Zugriffservers gemäß den folgenden Schritten durchgeführt wird:
- während des Initiierens und Aufbauens des Anrufes wird eine weitere Netzverbindungskennung oder Rufinformation in dem GSM-Netz oder der verbundenen Mobilfunkvermittlungsstelle erzeugt,
- während des Wiederaufbauens der Sitzung oder der PPP-Sitzung fordert der verbundene Zugriffsserver eine Berechtigung/Authentifizierung vom RADIUS-Server oder Abrechnungsserver an,
- der RADIUS-Server oder Abrechnungsserver bestimmt dann, daß der Anruf bzw. die Nummer bereits über eine in einem anderen Zugriffsserver laufende PPP-Sitzung verfügt, wobei die Sitzungsinformation oder der Sitzungsidentifizierer der anderen laufenden PPP-Sitzung zugeordnet wird,
- der RADIUS-Server dann die Sitzungsinformation oder den Sitzungsidentifizierer an den verbundenen Zugriffsserver weiterleitet,
- die bzw. der vom RADIUS-Server oder dem Abrechnungsserver erhaltene Sitzungsinformation oder Sitzungsidentifizierer wird in der entsprechenden weiteren Netzverbindungskennung gespeichert.

32. Verfahren nach einem der Ansprüche 20 bis 31, wobei bei einem Verbindungsabbau oder während der andauernden Verbindung der Rufdatensatz mit der Sitzungsinformation oder dem Sitzungsidentifizierer der Mobilfunkvermittlungsstelle an ein Abrechnungszentrum zum weiteren Abrechnungs- und Buchungsverfahren gesendet wird.

33. Verfahren nach einem der Ansprüche 20 bis 32, wobei, nachdem ein Zugriffsserver eine Sitzungsinformation oder einen Sitzungsidentifizierer an eine Mobilfunkvermittlungsstelle gesendet hat, die Mobilfunkvermittlungsstelle Modus-Parameter an den Zugriffsserver zurücksendet.

34. Verfahren nach Anspruch 33, wobei die Parameter von der Mobilfunkvermittlungsstelle Informationen darüber enthalten, ob ein Halbverbindungsmodus SCM erlaubt ist oder nicht.

## Revendications

1. Réseau de communications comprenant une première et une seconde partie de réseau et une interface entre les deux parties de réseau, dans lequel les première et seconde parties de réseau sont basées sur des systèmes de comptabilisation différents, et
dans lequel la première partie de réseau produit une entrée de données d'appel attribuée à chaque appel initialisé et établi à partir de la première partie de réseau, ledit appel initialisant une session dans la seconde partie de réseau via l'interface,
dans lequel la seconde partie de réseau génère une entrée de données de session attribuée à ladite session et comprenant un identificateur de session en cours de transfert de la seconde partie de réseau à la première partie de réseau via l'interface, et
à l'intérieur de la première partie de réseau, des moyens pour additionner l'identificateur de session reçu à l'entrée de données d'appel attribuée audit appel initialisé et établi, et
des moyens pour taxer et comptabiliser l'appel sur la base de l'entrée de données d'appel et dudit identificateur de session de l'entrée de données d'appel.

2. Réseau de communications système selon la revendication 1, dans lequel la première partie de réseau est une partie de réseau à commutation de seconde partie de réseau est une partie de réseau à commutation de paquets.

3. Réseau de communications selon la revendication 2, dans lequel la partie de réseau à commutation de circuits est un réseau mobile national public PLMN (GSM(Global System of mobile Communication) ou réseau fixe (PSTN (réseau de téléphonie public commuté) ou ISDN).

4. Réseau de communications selon la revendication 2, dans lequel la partie de réseau à commutation de paquets est un réseau GPRS (General Packet Radio System) ou à base Internet ou Protocole Internet.

5. Réseau de communications selon la revendication 2, dans lequel la partie de réseau à commutation de circuits produit des informations d'appel à l'intérieur de l'entrée de données d'appel dudit appel, les informations d'appel étant transférées de la partie de réseau à commutation de circuits à la partie de réseau à commutation de paquets via l'interface, et
à l'intérieur de la partie de réseau à commutation de paquets, des moyens pour additionner les informations relatives à l'appel reçu à l'entrée de données de session attribuée à ladite session.

6. Réseau de communications selon la revendication 2 ou 5, dans lequel la partie de réseau à commutation de paquets comprend un serveur remote authentication dial in user service (RADIUS) ou un serveur DIAMETER produisant l'identificateur de session.

7. Réseau de communications selon la revendication 6, dans lequel le serveur RADIUS ou le serveur DIAMETER est le moyen pour additionner les informations d'appel en provenance de la partie de réseau à commutation de circuits à l'entrée de données de session.

8. Réseau de communications selon l'une des revendications 2 à 7,dans lequel des informations de session correspondent à l'identificateur de session.

9. Réseau de communications selon la revendication 3, dans lequel le réseau GSM comprend un ou plusieurs centres de commutation de services mobiles (MSC), au moins un des centres de commutation de services mobiles MSC générant les informations d'appel attribuées audit appel initialisé et établi.

10. Réseau de communications selon la revendication 9, dans lequel chacun des centres de commutation de services mobiles MSC est connecté à un centre de facturation en tant que moyen pour taxer et comptabiliser l'appel respectif.

11. Réseau de communications selon l'une des revendications 1 à 10, dans lequel l'interface entre les première et seconde parties de réseau comprend un serveur d'accès ou plusieurs serveurs d'accès.

12. Réseau de communications selon la revendication 11, dans lequel le serveur d'accès est un serveur d'accès autonome.

13. Réseau de communications selon la revendication 12, dans lequel, dans le cas d'un serveur d'accès autonome, une interface externe est prévue pour envoyer les informations relatives à la session ou l'identificateur de session du serveur d'accès autonome au MSC via une interface externe.

14. Réseau de communications selon la revendication 11, dans lequel l'interface comprend un serveur d'accès intégré ou plusieurs serveurs d'accès intégrés, chaque serveur d'accès intégré étant une partie d'un MSC.

15. Réseau de communications selon la revendication 14, dans lequel, dans le cas d'un serveur d'accès intégré, une interface interne est prévue pour transférer les informations relatives à la session ou l'identificateur de session de la partie de réseau à commutation de circuits à la partie de réseau à commutation de circuits via l'interface interne.

16. Réseau de communications selon l'une des revendications 1 à 15, dans lequel la partie de réseau à commutation de circuits comprend un ou plusieurs centres de commutation de services mobiles MSC, au moins l'un des centres de commutation de services mobiles MSC étant couplé à un serveur d'accès de la partie de réseau à commutation de paquets.

17. Réseau de communications selon la revendication 16, dans lequel le centre de commutation de services mobiles MSC génère une référence d'appel de réseau en tant qu'informations d'appel faisant partie de l'entrée de données d'appel, la référence d'appel de réseau étant transférée, via l'interface, du centre de commutation de services mobiles MSC au serveur RADIUS ou serveur de comptabilité de la partie de réseau à commutation de paquets via le serveur d'accès, et le serveur RADIUS ou serveur de comptabilité utilisant la référence d'appel de réseau en tant qu'informations relatives à la session ou identificateur de session.

18. Réseau de communications selon la revendication 1, dans lequel les première et seconde parties de réseau sont des parties de réseau à commutation de paquets.

19. Réseau de communications selon la revendication 1, dans lequel les première et seconde parties de réseau sont des parties de réseau à commutation de circuits.

20. Procédé pour taxer et comptabiliser un appel dans un réseau de communications, comprenant une première partie de réseau et une seconde partie de réseau et une interface entre la première partie de réseau et la seconde partie de réseau,
dans lequel, pendant l'initialisation et l'établissement d'un appel dans la première partie de réseau, une session est initialisée par l'appel dans la seconde partie de réseau, une entrée de données d'appel attribuée audit appel initialisé et établi étant générée dans la première partie de réseau,
dans lequel, dans la seconde partie de réseau, une entrée de données de session est générée, laquelle est attribuée à la session et comprend un identificateur de session,
dans lequel l'identificateur de session est transféré de la seconde partie de réseau à la première partie de réseau via l'interface, et
à l'intérieur de la première partie de réseau, l'identificateur de session reçu est additionné à l'entrée de données d'appel attribuée audit appel initialisé et établi, dans lequel la taxation et la comptabilité de l'appel sont effectués sur la base de l'entrée de données d'appel et ledit identificateur de session est additionné à l'entrée de données d'appel.

21. Procédé selon la revendication 20, dans lequel la première partie de réseau est une partie de réseau à commutation de circuits, et la seconde partie de réseau est une partie de réseau à commutation de paquets.

22. Procédé selon la revendication 21, dans lequel, au cours de l'initialisation et de l'établissement d'un appel, une référence d'appel de réseau faisant partie de l'entrée de données d'appel est générée à l'intérieur de la partie de réseau à commutation de circuits, dans lequel la référence d'appel de réseau est transférée de la partie de réseau à commutation de circuits à la partie de réseau à commutation de paquets via l'interface.

23. Procédé selon la revendication 21, dans lequel, au cours de l'initialisation et de l'établissement d'un appel, une référence d'appel de réseau faisant partie de l'entrée de données d'appel est générée à l'intérieur de la partie de réseau à commutation de paquets, dans lequel la référence d'appel de réseau est transférée de la partie de réseau à commutation de paquets à la partie de réseau à commutation de circuits via l'interface.

24. Procédé selon l'une des revendications 21 à 23, dans lequel, au cours de l'initialisation et de l'établissement d'un appel, une session PPP à protocole point-to-point, est lancée dans la partie de réseau à commutation de paquets.

25. Procédé selon l'une des revendications 21 à 24, dans lequel, au cours de l'initialisation et de l'établissement d'un appel, une authentification et une autorisation sont prévues à l'intérieur de la partie de réseau à commutation de paquets.

26. Procédé selon les revendications 21 à 25, dans lequel, au cours de l'initialisation et de l'établissement d'un appel dans un réseau GSM, la référence d'appel de réseau de l'entrée de données d'appel attribuée audit appel est générée par un centre de commutation de services mobiles MSC du réseau GSM, ledit appel étant couplé à un serveur d'accès par ledit centre de commutation de services mobiles MSC, et après connexion directe, une session PPP est initialisée dans la partie de réseau à commutation de paquets.

27. Procédé selon la revendication 26, au cours du lancement de la session PPP un message Access Request est envoyé du serveur d'accès à un serveur RADIUS et après réception d'un message Access Accept du serveur RADIUS dans le serveur d'accès, la session ou connexion PPP est établie.

28. Procédé selon la revendication 27, dans lequel, au cours de la session PPP, un message Accounting Request est envoyé du serveur d'accès (AS) au serveur RADIUS ou serveur de comptabilité, le message Accounting Request comprenant les informations d'appel ou une référence d'appel de réseau, après cela stockage des informations d'appel ou de la référence d'appel de réseau dans le serveur RADIUS ou de comptabilité et dans l'entrée de données d'appel générée dans le centre de commutation de services mobiles MSC, et renvoi d'un message Account Response du serveur RADIUS ou serveur de comptabilité au serveur MSC.

29. Procédé selon la revendication 26, dans lequel l'appel est en mesure de s'engager en mode semi-connecté, dans lequel la connexion physique est libérée, tandis que des paramètres à protocole PPP point-to-point de la session de numérotation sont conservés.

30. Procédé selon la revendication 29, dans lequel, en mode semi-connecté, le rétablissement d'appel dans la même configuration de serveur MSC/accès est exécutée via les étapes suivantes :
au cours de l'initialisation et du rétablissement de l'appel, une autre référence d'appel de réseau est générée dans le réseau GSM ou le centre de commutation de services mobiles MSC connecté,
au cours du rétablissement de la session ou de la session PPP, le serveur d'accès connecté détermine qu'une session ou session PPP a été établie avant pour l'appel ou numéro correspondant,
après cela, les informations de session ou identificateur de session correspondants stockés avant dans le serveur d'accès ou le serveur de comptabilité sont recherchées par le serveur d'accès et stockées dans la référence de données d'appel supplémentaire du centre de commutation de services mobiles MSC.

31. Procédé selon la revendication 29, dans lequel, en mode semi-connecté, le rétablissement d'appel dans une autre configuration de serveur MSC/accès est exécuté via les étapes suivantes :
au cours de l'initialisation et de l'établissement de l'appel, une référence d'appel de réseau supplémentaire ou informations d'appel sont générées dans le réseau GSM ou le centre de commutation de services mobiles connecté MSC, au cours du rétablissement de la session ou session PPP, le serveur d'accès connecté demande l'autorisation/authentification du serveur RADIUS ou serveur de comptabilité, ensuite le serveur RADIUS ou serveur de comptabilité détermine que l'appel ou numéro a déjà une autre session PPP en cours dans un autre serveur d'accès, les informations de session ou identificateur de session étant attribués à l'autre session PPP en cours,
ensuite, le serveur RADIUS envoie les informations relatives à la session ou l'identificateur de session au serveur d'accès connecté,
les informations reçues relativement à la session ou identificateur de session à partir du serveur RADIUS ou serveur de comptabilité sont stockées dans la référence d'appel de réseau supplémentaire correspondante.

32. Procédé selon l'une des revendications 20 à 31, dans lequel, lors d'une déconnexion d'appel ou pendant l'appel en cours, l'entrée de données d'appel portant les informations de session ou l'identificateur de session du centre de commutation de services mobiles MSC est envoyée à un centre de facturation pour taxation supplémentaire et traitement de la comptabilité.

33. Procédé selon l'une des revendications 20 à 32, dans lequel, après qu'un serveur d'accès a envoyé des informations de session ou identificateur de session à un centre de commutation de services mobiles MSC, le centre de commutation de services mobiles MSC renvoie des paramètres de mode au serveur d'accès.

34. Procédé selon la revendication 33, dans lequel les paramètres en provenance du centre de commutation de services mobiles MSC comprennent des informations sur l'autorisation du mode semi-connecté ou pas.
